(19) Europäisches Patentamt
European Patent Office
Office européen des brevets

(11) **EP 2 502 363 B1**

(12) **EUROPÄISCHE PATENTSCHRIFT**

(45) Veröffentlichungstag und Bekanntmachung des Hinweises auf die Patenterteilung:
**30.10.2013 Patentblatt 2013/44**

(51) Int Cl.:
***H04B 10/116*** (2013.01)

(21) Anmeldenummer: **10778617.0**

(22) Anmeldetag: **05.11.2010**

(86) Internationale Anmeldenummer:
**PCT/EP2010/066907**

(87) Internationale Veröffentlichungsnummer:
**WO 2011/061073 (26.05.2011 Gazette 2011/21)**

(54) **VERFAHREN UND ANORDNUNG ZUR STABILISIERUNG EINES FARBKODIERUNGSVERFAHRENS BEI EINER OPTISCHEN ÜBERTRAGUNG VON DATEN**

METHOD AND ARRANGEMENT FOR STABILIZING A COLOR CODING METHOD AND OPTICALLY TRANSFERRING DATA

PROCÉDÉ ET SYSTÈME DE STABILISATION D'UN PROCÉDÉ DE CODAGE DE COULEURS LORS D'UNE TRANSMISSION OPTIQUE DE DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2009 DE 102009053820**
**08.02.2010 DE 102010007273**

(43) Veröffentlichungstag der Anmeldung:
**26.09.2012 Patentblatt 2012/39**

(73) Patentinhaber: **Siemens Aktiengesellschaft**
**80333 München (DE)**

(72) Erfinder: **WALEWSKI, Joachim**
**82008 Unterhaching (DE)**

(56) Entgegenhaltungen:
**WO-A1-2004/068745    DE-A1-102007 043 255**

- **PANG G ET AL: "Optical wireless based on high brightness visible LEDs", INDUSTRY APPLICATIONS CONFERENCE, 1999. THIRTY-FOURTH IAS ANNUAL MEETI NG. CONFERENCE RECORD OF THE 1999 IEEE PHOENIX, AZ, USA 3-7 OCT. 1999, PISCATAWAY, NJ, USA,IEEE, US, Bd. 3, 3. Oktober 1999 (1999-10-03), Seiten 1693-1699, XP010355102, DOI: DOI:10.1109/IAS. 1999.805968 ISBN: 978-0-7803-5589-7**

**Beschreibung**

Die Erfindung betrifft ein Verfahren und eine Anordnung zur Stabilisierung eines Farbkodierungsverfahrens bei einer optischen Datenübertragung.

Aus dem Stand der Technik ist eine Datenübertragung mittels sichtbaren Lichts (»Visible-Light Communications«, VLC) bekannt, welche beispielsweise in Ergänzung zu herkömmlichen Funktechnik eingesetzt werden kann. Daten lassen sich dabei beispielsweise über lichtemittierende Dioden (LED) übertragen. Ein zu übertragender Datenstrom wird dabei beispielsweise in Form von für Menschen nicht wahrnehmbaren Modulationen übertragen.

Weiterhin ist ein jüngeres Kodierungsverfahren für sichtbares Licht bekannt, das auf einer Farbkodierung mit Elementarfarben beruht. Auf ein solches Verfahren wird in der Fachwelt auch unter dem Begriff CSK (»Color Shift Keying«) Bezug genommen. Weitere ältere Bezeichnungen für dieses Kodierungsverfahren sind CCM (»Color Code Modulation«) oder CMC (»Color Multiplex Coding«).

Das Funktionsprinzip von VLC unter Anwendung dieses Farbkodierungsverfahrens besteht grob gesagt darin, eine aus mehrere Elementarfarben gemischte Beleuchtung zur zusätzlichen Übertragung von Daten zu verwenden, wobei die jeweiligen Elementarfarben derart rasch moduliert werden, dass für das menschliche Auge in der Summe eine kontinuierliche Mischfarbe erkannt wird. Üblichweiße werden hierzu die drei Elementarfarben rot, grün und blau verwendet, welche in technisch ausgereifter Weise durch entsprechende Leuchtdioden emittierbar sind.

Aus der WO 2004/068745 A1 geht ein Verfahren zur optischen Übertragung von Daten zwischen einem Sender und einem Empfänger hervor, bei dem zur Kodierung und Übertragung von Daten eine Mehrzahl von Elementarfarben vorgesehen ist, bei dem eine jeweilige Elementarfarbe durch mindestens eine jeweilige senderseitige optische Strahlungsquelle gesendet wird und empfängerseitig von mindestens einem jeweiligen optischen Strahlungsempfänger empfangen wird, wobei eine Regelschleife zwischen dem Sender und dem Empfänger gebildet wird.

Eine ausführliche Beschreibung von CSK findet sich im Änderungsvorschlag zum Standard IEEE P802.15.7, Yokoi et al.: »Modified Text clause 6.9.2.2«, 17. Januar 2010, Dokumentidentifizierung »15- 10- 0036- 00- 0007«. Eine der für CSK vorgeschlagenen Anwendungen ist VLC, also eine Freiraumkommunikation mit Licht.

In besagten Änderungsvorschlag wird eine automatische empfängerseitige Kompensation von Änderungen der optischen Leistung der senderseitig vorgesehenen Elementarfarben-Leuchtdioden beschrieben. Derartige Änderungen ergeben sich beispielsweise durch Alterungserscheinungen der einzelnen Leuchtdioden, welche mit zunehmender Betriebsdauer bei gleicher zugeführter elektrischer Leistung eine geringere optische Leistung auszusenden vermögen. Eine solche Änderung geht eine proportionale Änderung der Quanteneffizienz der Sender einher. Eine Kompensation der Mischfarbe, also des Spektrums der ausgesandten Strahlung, ist gemäß diesem Änderungsvorschlag aufgrund der lediglich empfängerseitigen Kompensation naturgemäß nicht vorgesehen.

Es besteht also ein Bedürfnis, Änderungen der optischen Leistung der senderseitig vorgesehenen Elementarfarben-Leuchtdioden nicht empfängerseitig, etwa durch eine angepasste Empfindlichkeit von Strahlungsempfängern, zu kompensieren, sondern senderseitig, etwa durch eine höhere Zufuhr von elektrischer Energie bei nachgelassener Quanteneffizienz.

Aufgabe der Erfindung ist es, Mittel zur senderseitigen Kompensation des Spektrums der ausgesendeten optischen Strahlung vorzusehen.

Eine Lösung der Aufgabe erfolgt durch ein Verfahren mit den Merkmalen des Patentanspruchs 1 sowie durch ein optisches Übertragungssystem mit den Merkmalen des Patentanspruchs 12.

Die Erfindung basiert auf einem an sich bekannten Verfahren zur optischen Übertragung von Daten zwischen einem Sender und einem Empfänger, bei dem zur Kodierung und Übertragung der Daten ein Farbkodierungsverfahren auf Basis einer Mehrzahl von Elementarfarben vorgesehen ist, bei dem weiterhin eine jeweilige Elementarfarbe durch eine jeweilige senderseitige optische Strahlungsquelle gesendet wird und empfängerseitig von einem jeweiligen optischen Strahlungsempfänger empfangen wird.

Erfindungsgemäß ist vorgesehen, eine Regelschleife zwischen dem Sender und dem Empfänger zu bilden, wobei vom Sender Kalibrierungsnachrichten an den Empfänger gesendet werden, welche im Empfänger oder, alternativ, im Sender, durch einen Vergleich mit zumindest einer zuvor gesendeten und/oder gespeicherten Kalibrierungsnachricht anhand einer Kanaleigenschaft der beiden verglichenen Kalibrierungsnachrichten eine Kompensationsinformation ermittelt wird. Auf Basis des ermittelten Kompensationsinformation wird im Sender eine Anpassung mindestens eines Sendeparameters vorgenommen. Die Kalibrierungsnachricht kann dabei entweder zuvor gesendet, oder in einer entsprechenden Werkseinstellung bereits gespeichert worden sein.

Die Begriffe »Sender« und »Empfänger« sind dabei dahingehend zu verstehen, dass der »Sender« neben seiner Eigenschaft, in einem Duplexbetrieb sowohl Daten zu senden als auch zu empfangen, gleichzeitig als Lichtquelle fungiert, während der »Empfänger« zwar Daten in einem Duplexbetrieb senden und empfangen vermag, jedoch nicht notwendigerweise als Lichtquellebetrieben wird. Ein Betrieb des Senders als Lichtquelle umfasst dabei zum Beispiel eine Ausführungsform als Raumbeleuchtung oder auch als Anzeigentafel.

In vorteilhafter Weise ermöglicht die Erfindung eine senderseitige Kompensation der Mischfarbe der ausgesendeten optischen Strahlung, welche sich beispielsweise durch eine Intensitätsdrift einer einzelnen Elementarfarbe verändert hat.

Ein wesentlicher Vorteil der Erfindung ist somit darin zu sehen, dass unter Anwendung der erfindungsgemäßen Mittel eine stabile Farbkodierung ermöglicht wird, wobei die Farbdrift auf Seiten des Senders ausgeglichen wird. Ein weiterer offensichtlicher Vorteil ist, dass sich die ursprünglich eingestellte Farbe nicht im Lauf der Zeit ändert.

Eine senderseitige Kompensation der Farbdrift ist gegenüber einer empfängerseitigen Kompensation insbesondere dahingehend vorteilhaft, als diese lediglich in einem System - also z.B. dem gleichzeitig zur Datenübertragung verwendeten Raumbeleuchtungssystem - und nicht in einer Vielzahl von Empfängern - beispielsweise mit dem Raumbeleuchtungssystem kommunizierende tragbare Rechner - vorgenommen werden muss.

In vorteilhafter Weise wird der erfindungsgemäße Sender neben dem Austausch von Daten zur Raumbeleuchtung eingesetzt, indem die additiv gemischten Elementarfarben für das menschliche Auge eine zeitlich konstante Mischfarbe ergeben. Es sei jedoch betont, dass ein paralleler Einsatz des erfindungsgemäßen Senders als Raumbeleuchtung keineswegs erfindungswesentlich ist.

In umgehrter Weise ist ein Einsatz der Erfindung dahingehend denkbar, dass das erfindungsgemäße Verfahren zur optischen Übertragung von Daten ausschließlich den Zweck hat, die spektralen Daten der Raumbeleuchtung durch den Austausch von Kalibrierungsnachrichten und/oder Kompensationsinformation einzustellen. In einer solchen alternativen Ausführungsform der Erfindung soll die Raumbeleuchtung derart geregelt werden, dass eine gewünschte Farbe eingestellt oder eine Farbdrift der Raumbeleuchtung kompensiert wird, ohne dass die Übertragung von Daten einen über die Kompensation dieser Farbdrift hinausgehenden Zweck verfolgen würde.

Vorteilhafte Ausgestaltungen und Weiterbildungen der Erfindung sind Gegenstand der abhängigen Ansprüche.

In einer Ausgestaltung der Erfindung ist vorgesehen, eine Regelschleife zwischen dem Sender und dem Empfänger zu bilden, wobei vom Sender Kalibrierungsnachrichten an den Empfänger gesendet werden, welche im Empfänger durch einen Vergleich mit zumindest einer zuvor gesendeten und/oder gespeicherten Kalibrierungsnachricht anhand einer Kanaleigenschaft der beiden verglichenen Kalibrierungsnachrichten Kompensationsfaktoren ermittelt werden. Auf Basis des ermittelten Kompensationsfaktors wird eine Kompensationsinformation vom Empfänger an den Sender gesendet, anhand deren der Sender eine Anpassung mindestens eines Sendeparameters vorzunehmen in der Lage ist.

Gemäß einer weiteren Ausgestaltung der Erfindung ist vorgesehen, eine Farbdrift des Senders dahingehend auszugleichen, indem ein Vergleich einer Kompensationsmatrix $H_i$ mit einer ursprünglichen Kompensationsmatrix $H_0$ vorgenommen wird und eine Rück-Übermittlung von Kompensationsfaktoren $c$ zurück an den Sender erfolgt. Alternativ erfolgt die Ermittlung mindestens eines Kompensationsfaktoren $c$ im Sender auf Basis der Kompensationsinformation.

Ein Ausführungsbeispiel mit weiteren Vorteilen und Ausgestaltungen der Erfindung wird im Folgenden anhand der Zeichnung näher erläutert.

Dabei zeigen:

Fig. 1: ein Strukturbild zur schematischen Darstellung eines optischen Übertragungssystems;

Fig. 2: ein Strukturbild zur schematischen Darstellung einer erfindungsgemäßen Regelschleife;

Fig. 3: eine zweidimensionale CIE-Normfarbtafel mit einer aus vier Punkten definierten Farbzuordnung;

Fig. 4A: eine Funktion einer optischen Strahlungsleistung einer Strahlungsquelle in Abhängigkeit von einem zugeführten Treiberwechelstrom;

Fig. 4B: eine Funktion einer optischen Strahlungsleistung einer Strahlungsquelle in Abhängigkeit von einem zugeführten Treibergleichstrom; und;

Fig. 5: ein Strukturbild zur schematischen Darstellung eines optischen Übertragungssystems gemäß einer Ausführungsvariante der Erfindung.

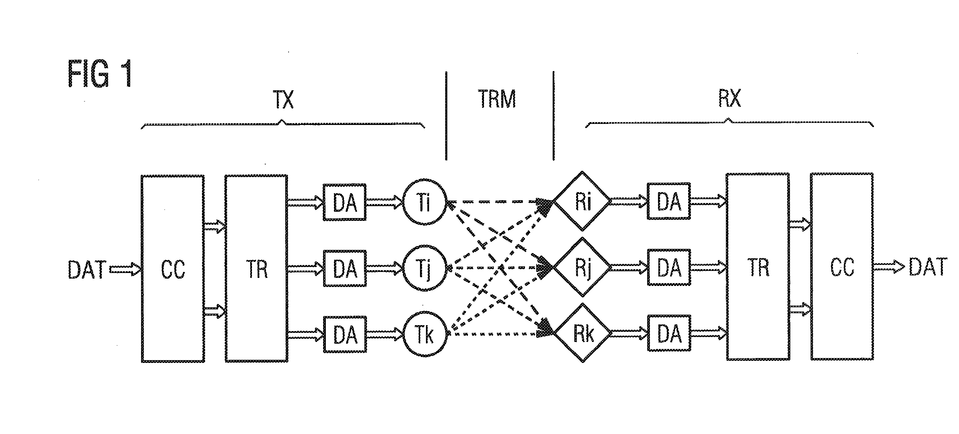

Figur 1 zeigt ein auf einem CSK (»Color Shift Keying«) basierendes optisches Datenübertragungssystem für sichtbares Licht, beispielsweise ein VLC-System (»Visible-Light Communication«).

Das Datenübertragungssystem besteht im Wesentlichen aus einem Sender TX, einer Übertragungsstrecke TRM sowie einem Empfänger RX. Das Übertragungssystem arbeitet in einem Duplexbetrieb bei dem der Sender TX sowohl Daten senden als auch empfangen kann. Entsprechendes gilt für den Empfänger RX.

Das CSK- Verfahren basiert auf eine Farbkodierung mit einer Mehrzahl von Elementarfarben, beispielsweise rot, grün und blau. Eine ausführliche Beschreibung von CSK findet sich im Änderungsvorschlag zum Standard IEEE P802.15.7, Yokoi et al.: »Modified Text clause 6.9.2.2«, 17. Januar 2010, Dokumentidentifizierung »15- 10- 0036- 00- 0007«.

In Figur 1 sind aus Vereinfachungsgründen seitens des Senders TX lediglich die zum Senden notwendigen Funktionseinheiten sowie seitens des Empfängers RX die zum Empfangen notwendigen Funktionseinheiten dargestellt.

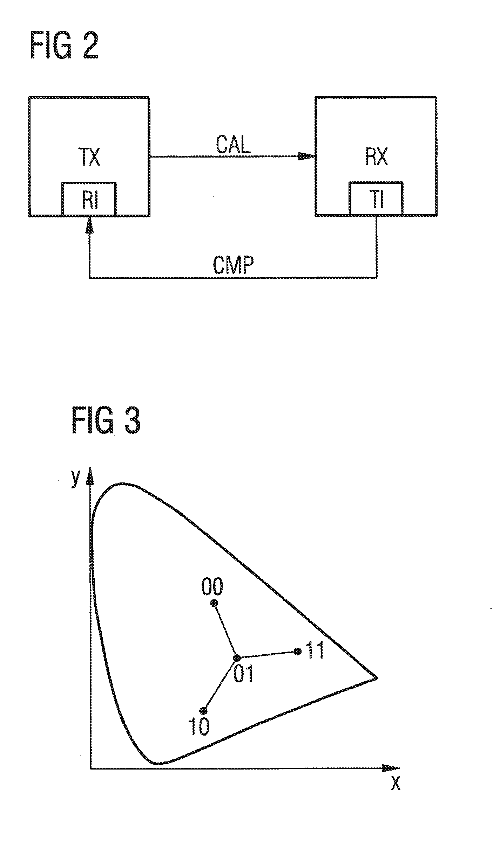

Auf Senderseite TX werden digitale Daten DAT zunächst einem Farbkodierer CC zugeführt. Die Daten DAT werden im Farbkodierer entsprechend einer Mappingregel in XY-Werte umgewandelt. Diese XY-Werte entsprechen Werte in einem XY-Farbkoordinatensystem gemäß der später zu beschreibenden Figur 3.

Am Ausgang des Farbkodierers CC werden diese zweidimensionalen Daten - in der Zeichnung durch zwei Pfeile symbolisiert - einem Transformer TR zugeführt, an dessen Ausgang drei digitale Intensitätsdaten für eine Intensität jeweils einer von drei Elementarfarben zur Verfügung gestellt werden.

Ein jeweiliges digitales Intensitätsdatum wird einem Konverter DA zugeführt, in welchem die digitalen Intensitätsdaten in analoge Intensitätsdaten gewandelt werden. Diese analogen Intensitätsdaten werden einer jeweils zugehörigen optischen Strahlungsquelle Ti,Tj,Tk, also einer ersten optischen Strahlungsquelle Ti, einer zweiten optischen Strahlungsquelle Tj, und einer dritten optischen Strahlungsquelle Tk zugeführt.

Gemäß einem bevorzugten Ausführungsbeispiel der Erfindung entspricht die erste optische Strahlungsquelle Ti einer roten Leuchtdiode, die zweite optische Strahlungsquelle Tj einer grünen Leuchtdiode sowie die dritte optische Strahlungsquelle Tk einer blauen Leuchtdiode.

Die so von der jeweiligen Strahlungsquelle Ti,Tj,Tk gesendete optische Strahlung wird über eine Übertragungsstrecke TRM in Richtung des Empfängers RX geführt.

Auf Seiten des Empfängers RX trifft die gesendete optische Strahlung auf einem auf eine jeweilige Elementarfarbe eingestellten Strahlungsempfänger Ri,Rj,Rk, nämlich einem ersten optischen Strahlungsempfänger Ri, einem zweiten optischen Strahlungsempfänger Rj sowie einem dritten optischen Strahlungsempfänger Rk.

In einer analogen, zum Sender TX entgegenlaufenden Weise wird im Empfänger RX das jeweilige optische Signal durch die optischen Strahlungsempfänger Ri,Rj,Rk in ein elektrisches analoges Signal umgewandelt, welches einem jeweiligen Konverter DA zugeführt wird, in welchem eine jeweilige Umsetzung des analogen Signals in ein jeweiliges digitales Signal erfolgt.

Die an den drei jeweiligen Konvertern DA abgegriffenen digitalen Intensitätsdaten werden einem Transformer zugeführt, welcher in einer zum Sender TX entgegengesetzten Weise eine Umsetzung des Wertetripels in ein Wertedupel vornimmt, welches wiederum einem Farbdekodierer CD zugeführt wird, an dessen Ausgang schließlich Daten DAT entnommen werden, welche in einer korrekten Betriebsart identisch mit den dem Sender TX zugeführten Daten DAT sind.

Anhand von Figur 1 wird eine Übertragungsfunktion eines CSK - Systems betrachtet. In allgemeiner Schreibweise bezeichnet **A** im Folgenden eine Matrix und **a** einen Spaltenvektor.

In einem ideal synchronisierten CSK-System mit einer sogenannten flachen Frequenzantwort kann der Zusammenhang zwischen einem durch die optischen Strahlungsquellen Ti,Tj,Tk zu sendenden digitalen Signal $s_{Tx}$ und dem in den optischen Strahlungsempfängern Ri,Rj,Rk empfangenen digitalen Signal $s_{Rx}$ folgendermaßen beschrieben werden.

$$s_{Rx} = B\ E\ T\ Q\ A\ s_{Tx} = H\ s_{Tx} \qquad (1)$$

Das vektorielle empfangene Signal $s_{Rx}$ kann beispielsweise aus einem roten, grünen und blauen Signal bestehen, wobei der Index i dem roten Signal, der Index j dem grünem Signal und der Index k dem blauen Signal zugeordnet sei, d.h.

$$s_{Rx} = (i_{Rx}\ j_{Rx}\ k_{Rx})^{T}, \qquad (2)$$

und wobei $(.)^{T}$ die Transponierte des Vektors $(.)$ darstellt.

Eine empfängerseitige Konvertierungsmatrix **B** ist eine Diagonalmatrix und beschreibt den Konvertierungsfaktor zwischen dem analogen und dem digitalen Empfängersignal.

Eine Empfindlichkeitsmatrix **E** beschreibt die Empfindlichkeit einer der farbselektiven Strahlungsempfänger Ri, Rj,Rk (Fotorezeptoren) beim Empfang einer der Elementarfarben. Typischerweise, jedoch nicht zwingend, werden genauso viele Strahlungsempfänger Ri,Rj,Rk wie Elementarfarben-Leuchtdioden, also optische Strahlungsquellen Ti,Tj, Tk benutzt. Mit einer Zuordnung des Indizes i zu »rot«, j zu »grün« und k zu »blau« ist das Element $e_{ii}$ der Matrix **E** beispielsweise die Empfindlichkeit des roten Fotorezeptors bei Empfang des von der roten LED ausgesendeten Lichtes. Die Empfindlichkeitsmatrix **E** berücksichtigt also die spektrale Effizienz eines jeweiligen auf eine Elementarfarbe ansprechenden Strahlungsempfängers Ri,Rj,Rk und zusätzlich eines eventuell vorgesehenen Farbfilters sowie, durch eine entsprechende Linearkombination der Koeffizienten der Empfindlichkeitsmatrix **E**, ein »Übersprechen« zwischen den auf eine jeweilige Elementarfarbe ansprechenden Strahlungsempfängern Ri,Rj,Rk. Ein Beispiel für einen solchen Koeffizienten der Empfindlichkeitsmatrix $E$ ist $e_{ij}$.

Eine Transmittanzmatrix $T$ beschreibt die optische Transmittanz von einem jeweiligen Elementarfarben-Strahlungsquellen Ti,Tj,Tk zu einem für eine jeweils andere Elementarfarbe vorgesehenen Strahlungsempfänger Ri,Rj,Rk. Mit anderen Worten beschreibt die Transmittanzmatrix T die Ausbreitungscharakteristika des Lichts, z.B. wie viel von einem durch die erste optische Strahlungsquelle Ti gesendetem rotem Licht auf dem für blaues Licht vorgesehenen dritten Strahlungsempfänger Rk eintrifft.

Eine Quanteneffizienzmatrix $Q$ ist eine Diagonalmatrix und beschreibt die Quanteneffizienz der Umwandlung des Treiberstromes in optische Leistung.

Eine senderseitige Konvertierungsmatrix $A$ ist ebenfalls eine Diagonalmatrix und beschreibt den Zusammenhang zwischen dem digitalen Signal und dem der LED zugeführten AC Treiberstroms.

Eine Kanaleigenschaftsmatrix $H$ vereinigt die Kanaleigenschaften der optischen Übertragungsstrecke gemäß

$$ H = B \ E \ T \ Q \ A $$

Die Kanaleigenschaftsmatrix H wird, wie später dargestellt, durch ein Senden von Kalibrierungssymbolen ermittelt. Dazu werden beispielsweise Walsh-Kodierungen verwendet.

Ändern sich im Laufe der Zeit die Quanteneffizienz der optischen Strahlungsquellen Ti,Tj,Tk, mit anderen Worten das Verhältnis des jeweils zugeführten Treiberstrom in optische Leistung und somit rechnerisch die Quanteneffizienzmatrix $Q$ zu der geänderten Quanteneffizienzmatrix $Q'$, so ändern sich bei gleichen Sendersignalen die empfangenen Signale und somit nach Gleichung (1) auch $s_{Rx}$.

Änderungen in der Quanteneffizienz $Q$ ergeben sich beispielsweise durch Temperaturänderung oder aufgrund eines Alterungsprozesses in den sendenden Leuchtdioden. Eine Änderung der Quanteneffizienz bedeutet für die jeweilige optische Strahlungsquelle Ti,Tj,Tk dass bei gleichen Strom weniger oder mehr optische Leistung abgestrahlt wird.

Mit Hilfe von gesendeten Kalibrierungssymbolen wird nun eine geänderte Kanaleigenschaftsmatrix $H'$ gemäß der Gleichung

$$ H' = B \ E \ T \ Q' \ A $$

ermittelt. Diese geänderte Kanaleigenschaftsmatrix $H'$ korrigiert zwar die empfangenen Signale, aber nicht die aus der optischen Überlagerung der einzelnen Leuchtdioden resultierende Mischfarbe des gesendeten Lichts. Mit anderen Worten werden gemäß dem Stand der Technik keine Änderungen an Sendeparametern vorgenommen, eine Kompensation erfolgt also bislang ausschließlich empfängerseitig.

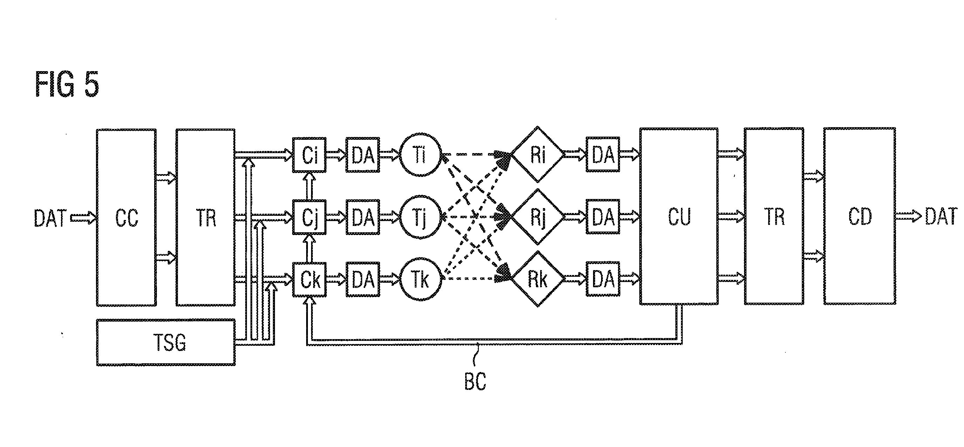

Zur Korrektur der Sendeparameter wird das nachfolgende Verfahren gemäß der Figuren 2 und 5 vorgeschlagen.

Figur 2 zeigt zunächst ein Prinzipbild zur schematischen Darstellung der erfindungsgemäßen Regelschleife. Dabei sind erneut die aus Figur 1 bekannten Funktionseinheiten Sender TX und Empfänger RX dargestellt.

Der Sender TX übermittelt mindestens eine Kalibrierungsnachricht CAL an den Empfänger RX. Im Empfänger RX wird durch einen Vergleich einer Kanaleigenschaft der empfangenen Kalibrierungsnachricht CAL oder von zuvor gespeicherten Werten mit einer Kanaleigenschaft einer zuvor empfangenen Kalibrierungsnachricht CAL mindestens ein - nicht dargestellter - Kompensationsfaktor errechnet. Kanaleigenschaften werden z.B. durch die oben erläuterte Kanaleigenschaftsmatrix $H'$ repräsentiert.

Auf Basis des Kompensationsfaktors wird eine Kompensationsinformation CMP erstellt, welche vom Empfänger RX über eine empfängerseitige Sendeschnittstelle TI an den Sender TX gesendet. Dort wird sie über eine senderseitige Empfangsschnittstelle RI empfangen. Auf Basis der im Sender TX empfangen Kompensationsinformation CMP wird daraufhin eine Anpassung mindestens eines Sendeparameters vorgenommen.

Figur 5 zeigt unter anderem die aus Figur 1 bekannten Funktionskomponenten eines optischen Datenübertragungssystems, wobei die in Figur 2 gezeigte Regelschleife durch einen Rückkanal BC realisiert ist.

Auf Seiten des Senders TX ist ein Kalibrierungsnachrichtengenerator TSG vorgesehen, durch welchen digitale Kalibrierungsnachrichten auf den Eingang eines jeweiligen Konverters DA einer jeweiligen optischen Strahlungsquelle Ti,Tj,Tk angelegt werden. Die daraufhin konvertierten und über die optischen Strahlungsquellen Ti,Tj,Tk gesandten Kalibrierungsnachrichten werden auf Empfängerseite RX entsprechend dekodiert und von einer Korrektureinheit CU auf Empfängerseite ausgewertet.

Eine Kalibrierungsnachricht enthält eine Mehrzahl von Zeitschlitzen, in welche orthogonale, vorzugsweise Walsh-codierte Symbole eingeschrieben werden. Vorzugsweise wird dabei ein Symbol in mehrere aufeinanderfolgende Zeitschlitze eingetragen. Dies folgt einerseits statistischen Gründen einer Verbesserung der Auswertung seitens des Empfängers.

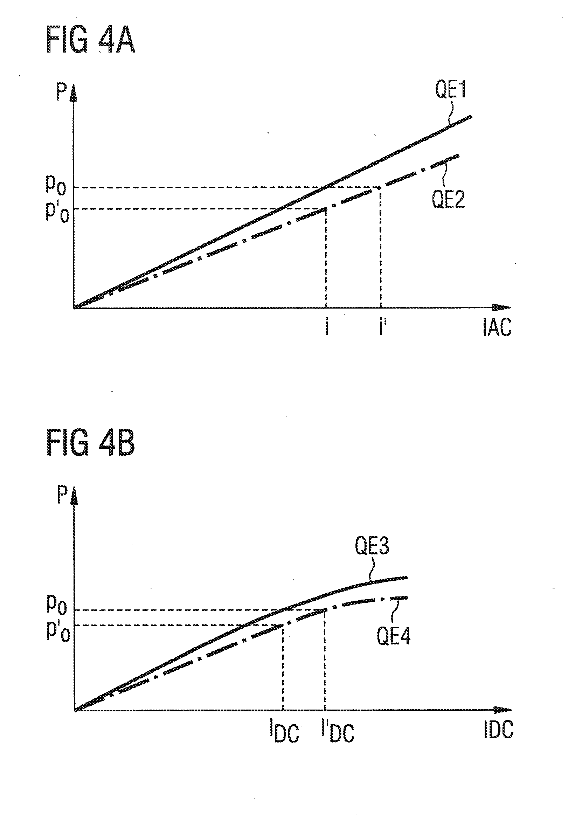

Zur Bewertung einer Wechselstromcharakteristik, die später anhand Figur 4A erläutert wird, ist es vorteilhaft, sowohl die Länge der Symbole als auch die Anzahl aufeinanderfolgender Zeitschlitze, in die das Symbol eingetragen wird, kurz zu halten, so dass die Gleichstromcharakteristik der jeweiligen Strahlungsquelle Ti,Tj,Tk sich nicht in den ausgewerteten Kalibrierungsnachrichten niederschlägt.

Andererseits kann durch eine Mehrzahl von identischen in aufeinanderfolgenden Zeitschlitzen gesendeten Symbolen eine vorteilhafte Bewertung des Gleichstromverhaltens erfolgen, wie später anhand Figur 4B erläutert wird. Insgesamt sollte die Kalibrierungsnachrichten jedoch eine zeitliche Länge um 10 Millisekunden nicht überschreiten, da für das menschliche Auge sich ansonsten ein Flackern der auch als Raumbeleuchtung genutzten Strahlungsquellen Ti, Tj,Tk ergibt.

In der Korrektureinheit CU des Empfängers TX wird nun durch einen Vergleich mindestens einer Kanaleigenschaft von zumindest einer empfangenen Kalibrierungsnachricht mit einer entsprechenden Kanaleigenschaft zumindest einer zuvor gesendeten oder gespeicherten Kalibrierungsnachricht ein Kompensationsfaktor ermittelt.

Hierzu wird von der Korrektureinheit CU auf Empfängerseite RX die Kanaleigenschaftsmatrix $H$, welche wie oben erläutert, mehrere Kanaleigenschaften beschreibt, zu Beginn einer Sequenz von Kalibrierungssignaldaten als Referenzkanaleigenschaftsmatrix $H_0$ gespeichert oder liegt auf Empfängerseite TX bereits vor. Nach einer Mehrzahl i von Kalibrierungsnachrichtenzyklen werden bei der i-ten Kalibrierung neu geschätzte Werte für $H_i$ mit den alten Werten der Referenzkanaleigenschaftsmatrix $H_0$ verglichen. Eine Multiplikation der invertierten Kanaleigenschaftsmatrix mit der Referenzkanaleigenschaftsmatrix ergibt eine Matrix $C$ wobei $C = H_i^{-1}H_0$.

Übersteigt der Unterschied einen vorgegebenen Wert, so wird ein Zahlenvektor $c$ = diag $(H_i^{-1}H_0)$ zurück an den Sender gesandt. Der Rechenoperator diag(.) bezeichnet dabei einen Spaltenvektor bestehend aus den Diagonalelementen einer Mat-rix (.). Der Zahlenvektor c vereinigt also im vorliegenden Ausführungsbeispiel drei Kompensationsfaktoren für die drei Elementarfarben.

Ein mögliches Kriterium für die Auslösung dieses Prozesses ist der Vergleich der Werte von $c$ mit dem Einheitsvektor. Sind die relativen Unterschiede zwischen mindestens einem der vektoriellen Elemente von $c$ größer als die Grenzen eines vorgebbaren Konfidenzintervalles um den Wert Eins, bspw. 1 $\pm$ 0,05, so wird im Sender eine Kompensation veranlasst. Ein solcher Wert kann beispielsweise anhand einer Ermittlung eines Histogramms von $c$ und eines vordefinierten, einstellbaren und/oder zuvor ermittelten Konfidenzintervalles ermittelt werden. Ergibt der Vergleich der Werte des Zahlenvektors von c mit dem Einheitsvektor einen Unterschied, welcher beispielsweise höher ist als die obere Grenz des Konfidenzintervalles wird der besagte Prozess ausgelöst.

Beispielsweise wird auf Basis des ermittelten vektoriellen Kompensationsfaktors $c$ eine - nicht dargestellte - Kompensationsinformation von der Korrektureinheit CU des Empfängers RX an den Sender TX gesendet.

Sind die Nebendiagonalelemente der Matrix C = $(H_i^{-1}H_0)$ ungleich Null, so können diese auf andere Störungsursachen zurückgeführt werden, beispielsweise eine Blockierung im »Übersprechen« von Ti und Tj auf Rk. In diesem Fall ist in einer Ausführungsform der Erfindung vorgesehen, anstatt der Kompensationsinformation oder zusätzlich zur Kompensationsinformation eine Fehlernachricht an den Sender TX zu übermitteln. Auf Seiten des Senders TX kann daraufhin eine entsprechende Warnung über eine eventuelle Fehlfunktion an einem identifizierbaren Empfänger RX oder an höhere Kommunikationsschichten ausgegeben werden.

Im Empfänger werden nun die zu sendenden digitalen Signale durch Zwischenschaltung eines jeweiligen Korrekturelements Ci,Cj,Ck mit den zugehörigen Werten von c multipliziert, so dass die Mischfarbe des ausgesandten Lichtes mit der ursprünglichen übereinstimmt.

Die ursprünglich empfängerseitig in der Korrektureinheit CU auf Empfängerseite TX gespeicherte Referenzmatrix $H_0$ kann nun wieder empfängerseitig als »Dekodierungsmatrix« benutzt werden.

Die erfinderische Kernidee liegt somit darin, dass durch Vergleich der Kompensationsmatrix $H_i$ mit der ursprünglichen Kompensationsmatrix $H_0$ und die Übermittlung von Kompensationsfaktoren c zurück an den Sender eine Farbdrift des Senders ausgeglichen werden kann.

Dadurch kann ein mit CSK-moduliertes optisches Freiraumsendesystem gleichzeitig für Beleuchtungs- und/oder Signalisierungszwecke benutzt werden.

Zwischen einer Änderung von $H$ durch eine Bewegung des Senders und des Empfängers zueinander einerseits und einer Farbverschiebung andererseits wird gemäß einer Ausführungform der Erfindung dadurch unterschieden, dass im ersten Fall einer Relativbewegung zwischen Sender und Empfänger eine relative Änderung der Werte von $c$ gleich groß ist, im Fall einer Farbverschiebung gemäß dem vorgenannten zweiten Fall jedoch nicht.

Im Fall einer Relativbewegung zwischen Sender und Empfänger wird kein Korrekturwert vom Empfänger an den Sender gesendet. Wohl aber wird $H_0$ wird durch $H_i$ ersetzt.

In einer weiteren Ausführung der Erfindung werden die so korrigierten Werte von $|s_{Tx}|$ nach oben begrenzt, um eine Überlastung der LED zu vermeiden. Hierbei ist in allgemeiner Schreibweise | . | der Vektor der Absolutwerte von $s_{Tx}$. Diese Grenzwerte können beispielsweise vom Hersteller vorgegeben werden oder auch aus den empfohlenen LED-Treiberströmen berechnet werden, falls die Matrix **A** bekannt ist.

Es ist wichtig anzumerken, dass das vorgeschlagene Verfahren auch bei streng monotonen Nichtlinearitäten zwischen dem Treiberstrom der LED und der ausgesendeten optischen Leistung funktioniert. Falls einfach ein linearer Zusammenhang um einen Arbeitspunkt herum angenommen wird, so wird die oben beschriebene Kompensation vorzugsweise mehrere Male nacheinander vollzogen, bis sich ein stabiler Wert für c ergibt.

Falls der Farbschwerpunkt des CCM-Diagramms absichtlich verschoben wird, so muss ein neues $H_0$ ermittelt werden. Bei unverändertem Farbschwerpunkt kann dann das oben beschriebene Kompensationsverfahren wieder benutzt werden.

Falls das Spektrum der Systemübertragungsfunktion nicht »flach« ist, kann der oben beschriebene Formalismus in folgender Weise abgewandelt werden:

Alle Symbole in den obigen Gleichungen werden durch die Fouriertransformierten der Impulsantworten ersetzt, bspw.

$$s_{\mathrm{Rx}} \; \rightarrow \; \mathcal{F}[s_{\mathrm{Rx}}(t)] \tag{3}$$

wobei F[.] eine Fouriertransformierte von [.] ist und t eine Zeitvariable. Die Gleichung (3) wird dann für die Frequenz ausgewertet, für welche eine konvexe Funktion des Vektors F[$s_{\mathrm{Rx}}$(t)] ein Maximum einnimmt. Mit Hilfe dieser Funktion wird dann die Frequenzdarstellung von **H** berechnet, welche als $H_F$ bezeichnet wird.

Ein Beispiel für eine solche konvexe Funktion ist

$$\mathcal{F}[s_{\mathrm{R,Rx}}(t)]^2 \; + \; \mathcal{F}[s_{\mathrm{G,Rx}}(t)]^2 \; + \; \mathcal{F}[s_{\mathrm{B,Rx}}(t)]^2 \tag{4}$$

Anstatt **H** wird nun $H_F$ für die oben beschriebene Ermittlung von **c** benutzt.

Es ist außerdem darauf hinzuweisen, dass das oben beschriebene Kompensationsverfahren auch verwendet werden kann, falls keine Nutzdaten übermittelt werden. Dazu müssen nur zu gewissen Abständen Kalibrierungssymbole gesendet und die Matrix $H_i$ geschätzt werden.

In Figur 3 ist eine zweidimensionale Normfarbtafel gemäß der Definition der internationalen Beleuchtungskommission CIE dargestellt. Dabei werden die drei Elementarfarben, beispielsweise rot, grün, blau auf zwei Koordinaten x, y abgebildet. Eine dritte Elementarfarbe wird für jeden Punkt der Farbtafel rechnerisch aus den beiden anderen durch die Beziehung x + y + z = 1 ermittelt.

Innerhalb der Normfarbtafel gemäß Figur 3 ist ein Farbzuordnung bzw. Farbmapping für ein 4- Punkt- CSK- Verfahren, auch 4CSK genannt, dargestellt. Dabei werden vier Farbpunkte definiert, welche in der Figur 3 als 00, 01, 10, 11 dargestellt sind. Ein entsprechendes 4CSK- Übertragungssystem ist in der Lage, pro übertragenes Symbol 2 Bit Daten zu übertragen.

Alternativ sind beliebige binäre Farbzuordnungen möglich. Für eine detaillierte Darstellung praktischer Ausführungsformen hierzu wird auf den Änderungsvorschlag zum Standard IEEE P802.15, Yokoi et al.: »Modified Text clause 6.9.2.2«, 17. Januar 2010, Dokumentidentifizierung »15- 10- 0036- 00- 0007 « verwiesen.

Figur 3 zeigt mit anderen Worten also graphisch eine mittels des in Figur 1 gezeigten Transformers TR vorgenommene Umrechnung (Mapping) eines zweidimensionalen xy-Werts in ein dreidimensionales Intensitätsdatum.

In Figur 4A ist eine Funktion der optischen Strahlungsleistung P einer Strahlungsquelle Ti,Tj,Tk in Abhängigkeit von einem zugeführten Treiberwechselstrom IAC, welche auch als Quanteneffizienz bezeichnet wird, dargestellt. Es ist unterstellt, dass diese Funktion quasi-linear ist.

Die in Figur 4A gezeigte durchgezogene Linie entspricht dabei einer ursprünglichen Quanteneffizienz QE1, welche sich im Verlauf eines Betriebs der Strahlungsquelle verändert, hier z.B. vermindert, dargestellt durch die darunterliegende strichpunktierte Linie gemäß einer geänderten Quanteneffizienz QE2.

Diese geänderte Quanteneffizienz QE2 hat zur Folge, dass für einen gegebenen Treiberwechselstrom i die ursprüngliche optische Leistung $p_0$ auf einen geringeren Wert $p_0$' sinkt. Um wieder auf die ursprüngliche optische Leistung $p_0$ zu kommen, muss der Treiberwechselstrom in einen höheren Wert i' geändert werden.

In Bezug auf die Quanteneffizienzmatrix **Q** sind deren Diagonalelemente proportional zu der Quanteneffizienz einer jeweiligen Strahlungsquelle Ti,Tj,Tk.

Eine Änderung in der Quanteneffizienz einzelner Strahlungsquellen Ti,Tj,Tk führt damit zu einer Änderung der Quanteneffizienzmatrix **Q** zu einer geänderten Quanteneffizienzmatrix **Q'** und entsprechend zu einer geänderten Kanaleigenschaftsmatrix **H'**.

In Figur 4B ist eine Funktion der optischen Strahlungsleistung P einer Strahlungsquelle Ti,Tj,Tk in Abhängigkeit von einem zugeführten Treibergleichstrom IDC dargestellt. In praktischen Ausführungen haben die für die Strahlungsquellen verwendeten Leuchtdioden eine von der Quanteneffizienz für Wechselströme gemäß 4A abweichende Quanteneffizienz für Gleichströme. Gründe hierfür sind z.B. eine thermale Trägheit und etwaige Sättigungseffekte in der Leuchtdiode.

Wie bereits erwähnt, können für die Ermittlung der Kanaleigenschaftsmatrix H bezüglich des Wechselstromverhaltens orthogonale Codes, insbesondere modifizierte Walsh-Codes verwendet werden.

Ein ähnlicher Ansatz kann für eine Abschätzung der Korrekturfaktoren für die Gleichströme bzw. Arbeitsströme (Bias Current) der Leuchtdiode angewandt werden. Zu diesem Zweck werden die Zeitschlitze des verwendeten orthogonalen Codes, beispielsweise vier Walsh-Codeschlitze, so oft über die optische Strahlungsquelle gesandt, bis diese ein thermales Gleichgewicht eingenommen hat. Zur Ermittlung der Kanaleigenschaftsmatrix bezüglich des Gleichstromverhaltens enthalten eine Mehrzahl von Zeitschlitzen der Kalibrierungsnachricht also jeweils ein identisches Symbol.

Die letzten empfangenen Werte am Ende eines Walsh- Codeschlitzes werden dann zur Abschätzung einer Gleichstrom- Kanaleigenschaftsmatrix $H_{DC}$ verwendet. Die jeweiligen Kanaleigenschaftsmatrizen werden dann in ähnlicher Weise zur Ermittlung des Korrekturwerts $c_{DC}$ = diag ($H_{DCi}^{-1}H_{DC0}$) eingesetzt.

Für eine nichtlineare charakteristische Gleichstromkurve gemäß Figur 4b sind dazu mehr als ein Iterationsschritt notwendig, um zu einem Schwerpunkt bzw. Arbeitspunkt innerhalb des CSK- Diagramms gemäß Figur 3 zu kommen. Der Schwerpunkt in Figur 3 ist im vorliegenden Ausführungsbeispiel mit Bezugszeichen 01 bezeichnet. Die übrigen gezeigten Punkte 00, 01, 10, 11 entsprechen Konstellationspunkten des Konstellationsdiagramms. In anderen Ausführungsformen kann der Schwerpunkt auch neben den Konstellationspunkten des Konstellationsdiagramms liegen.

Diese Iteration konvergiert nur in den Fällen, in denen die charakteristische Gleichstromkurve streng monoton verläuft.

**Patentansprüche**

1. Verfahren zur optischen Übertragung von Daten zwischen einem Sender (TX) und einem Empfänger (RX),
   bei dem zur Kodierung und Übertragung der Daten ein Farbkodierungsverfahren auf Basis einer Mehrzahl von Elementarfarben vorgesehen ist,
   bei dem eine jeweilige Elementarfarbe durch mindestens eine jeweilige senderseitige optische Strahlungsquelle ($T_i$, $T_j$, $T_k$) gesendet wird und empfängerseitig von mindestens einem jeweiligen optischen Strahlungsempfänger ($R_i$, $R_j$, $R_k$) empfangen wird, wobei
   eine Regelschleife zwischen dem Sender und dem Empfänger gebildet wird, **dadurch gekennzeichnet, daß**
   vom Sender Kalibrierungsnachrichten an den Empfänger gesendet werden, und,
   wobei durch einen Vergleich mindestens einer Kanaleigenschaft von zumindest einer empfangenen Kalibrierungsnachricht mit einer entsprechenden Kanaleigenschaft zumindest einer zuvor gesendeten oder gespeicherten Kalibrierungsnachricht zumindest eine Kompensationsinformation ermittelt wird,
   wobei auf Basis der Kompensationsinformation im Sender eine Anpassung mindestens eines Sendeparameters vorgenommen wird.

2. Verfahren nach Anspruch 1,
   **dadurch gekennzeichnet,**
   **dass** der Vergleich mindestens einer Kanaleigenschaft im Empfänger vorgenommen wird,
   **dass** im Empfänger durch einen Vergleich mindestens einer Kanaleigenschaft von zumindest einer empfangenen Kalibrierungsnachricht mit einer entsprechenden Kanaleigenschaft zumindest einer zuvor gesendeten Kalibrierungsnachricht zumindest ein Kompensationsfaktor ermittelt wird, und,
   **dass** auf Basis des ermittelten Kompensationsfaktors eine Kompensationsinformation vom Empfänger an den Sender gesendet wird.

3. Verfahren nach einem der vorgenannten Ansprüche,
   **dadurch gekennzeichnet,**
   **dass** für eine jeweilige Elementarfarbe ein Kompensationsfaktor ermittelt wird.

4. Verfahren nach einem der vorgenannten Ansprüche,
   **dadurch gekennzeichnet,**
   bei dem ein senderseitiger Transformer (TR) zur Umsetzung von zweidimensionalen digitalen Intensitätsdaten in einen Intensitätsdatenvektor mit einer der Mehrzahl von Elementarfarben entsprechenden Dimension umgesetzt wird.

**5.** Verfahren nach einem der vorgenannten Ansprüche,
**dadurch gekennzeichnet,**
**dass** drei Elementarfarben verwendet werden.

**6.** Verfahren nach einem der vorhergehenden Ansprüche,
**dadurch gekennzeichnet,**
**dass** durch einen Vergleich einer Kanaleigenschaftsmatrix von zumindest einer empfangenen Kalibrierungsnachricht mit einer entsprechenden Referenzkanaleigenschaftsmatrix zumindest einer zuvor gesendeten oder gespeicherten Kalibrierungsnachricht zumindest ein Kompensationsfaktor ermittelt wird.

**7.** Verfahren nach Anspruch 6,
**dadurch gekennzeichnet,**
**dass** der Kompensationsfaktor ein Zahlenvektor ist.

**8.** Verfahren nach Anspruch 7,
**dadurch gekennzeichnet,**
**dass** der Kompensationsfaktor ein Zahlenvektor, bestehend aus den Diagonalelementen einer Matrix ist, welche sich aus einer Multiplikation der invertierten Kanaleigenschaftsmatrix mit der Referenzkanaleigenschaftsmatrix ergibt.

**9.** Verfahren nach Anspruch 8,
**dadurch gekennzeichnet,**
**dass** auf Basis des ermittelten Kompensationsfaktors eine Kompensationsinformation vom Empfänger an den Sender erst dann gesendet wird, wenn mindestens ein vektorielles Element des Kompensationsfaktors einen Wert annimmt, welcher im Wesentlichen einen Wert ungleich Eins annimmt.

**10.** Verfahren nach Anspruch 9,
**dadurch gekennzeichnet,**
**dass** mindestens ein vektorielles Element des Kompensationsfaktors einen Wert von ungleich Eins dann annimmt, wenn der Wert des vektoriellen Elements Grenzen eines vorgebbares Konfidenzintervall um einen Wert von Eins über- und/oder unterschreitet.

**11.** Verfahren nach Anspruch 6,
**dadurch gekennzeichnet,**
**dass** zumindest ein Nebendiagonalelement einer Matrix, welche sich aus einer Multiplikation der invertierten Kanaleigenschaftsmatrix mit der Referenzkanaleigenschaftsmatrix ergibt, daraufhin überprüft wird, ob das zumindest eine Nebendiagonalelement im Wesentlichen von einem Wert von Null abweicht.

**12.** Verfahren nach Anspruch 11,
**dadurch gekennzeichnet,**
**dass** im Fall einer wesentlichen Abweichung zumindest eines Nebendiagonalelements der Matrix eine Fehlernachricht gesendet wird.

**13.** Verfahren nach einem der vorgenannten Ansprüche,
**dadurch gekennzeichnet,**
**dass** die Kalibrierungsnachricht orthogonale Kalibrierungssymbole umfasst.

**14.** Verfahren nach einem der vorgenannten Ansprüche,
**dadurch gekennzeichnet,**
**dass** die Kalibrierungsnachricht Walsh-codierte Kalibrierungssymbole umfasst.

**15.** Verfahren nach einem der Ansprüche 13 bis 14,
**dadurch gekennzeichnet,**
**dass** zur Ermittlung der Kanaleigenschaftsmatrix bezüglich des Gleichstromverhaltens eine Mehrzahl von Zeitschlitzen der Kalibrierungsnachricht jeweils ein identisches Kalibrierungssymbol enthält.

**16.** Optisches Übertragungssystem zur optischen Übertragung von Daten zwischen einem Sender (TX) und einem Empfänger (RX), eingerichtet zur Kodierung und Übertragung der Daten unter Anwendung eines Farbkodierungsverfahren auf Basis einer Mehrzahl von Elementarfarben, mit einer jeweiligen senderseitigen op- tische Strahlungsquelle ($T_i$, $T_j$, $T_k$) zum Senden einer jeweiligen Elementarfarbe und einem jeweiligen empfängerseitigen optischen Strahlungsempfänger ($R_i$, $R_j$, $R_k$),
mit

einer zwischen dem Sender und dem Empfänger ausgebildete Regelschleife zum Senden von Kalibrierungsnachrichten vom Sender an den Empfänger,
**gekennzeichnet durch**,

eine im Empfänger vorgesehene Kompensationseinheit (CU) zur Ermittlung mindestens eines Kompensationsfaktors **durch** Vergleich mindestens einer Kanaleigenschaft von zumindest einer empfangenen Kalibrierungsnachricht mit einer entsprechenden Kanaleigenschaft zumindest einer zuvor empfangenen Kalibrierungsnachricht,

einen Rückkanal (BC) zur Übermittlung einer Kompensationsinformation auf Basis des ermittelten Kompensationsfaktors vom Empfänger an den Sender,

im Sender vorgesehene Korrekturelement zur Anpassung mindestens eines Sendeparameters vorgenommen auf Basis der Kompensationsinformation.

**17.** Optisches Übertragungssystem nach Anspruch 16, zur Durchführung eines Verfahrens gemäß einem der vorgenannten Ansprüche 2 bis 15.

**Claims**

**1.** Method for optically transferring data between a transmitter (TX) and a receiver (RX),
wherein a colour coding method based on a plurality of elementary colours is provided for encoding and transferring the data,

wherein each elementary colour is transmitted by at least one respective optical radiation source ($T_i$, $T_j$, $T_k$) on the transmitter side and received on the receiver side by at least one respective optical radiation receiver ($R_i$, $R_j$, $R_k$),
wherein a control loop is formed between the transmitter and the receiver, **characterised in that**
the transmitter transmits calibration messages to the receiver and,

wherein at least one piece of compensation information is determined by means of comparing at least one channel property of at least one received calibration message with a corresponding channel property of at least one previously transmitted or stored calibration message,

wherein an adjustment of at least one transmitting parameter is made in the transmitter on the basis of the compensation information.

**2.** Method according to claim 1,
**characterised in that**
the comparison of at least one channel property is performed in the receiver,
by means of comparing at least one channel property of at least one received calibration message with a corresponding channel property of at least one previously transmitted calibration message, at least one compensation factor is determined in the receiver and,
based on the compensation factor determined, compensation information is transmitted from the receiver to the transmitter.

**3.** Method according to any one of the preceding claims,
**characterised in that**
a compensation factor is determined for each elementary colour.

**4.** Method according to any one of the preceding claims,
**characterised in that**
a transformer (TR) is provided on the transmitter side for converting two-dimensional digital intensity data into an intensity data vector with a dimension corresponding to the plurality of elementary colours.

**5.** Method according to any one of the preceding claims,
**characterised in that**
three elementary colours are used.

**6.** Method according to any one of the preceding claims,
**characterised in that**

at least one compensation factor is determined by means of comparing a channel property matrix of at least one received calibration message with a corresponding reference channel property matrix of at least one previously transmitted or stored calibration message.

7. Method according to claim 6,
**characterised in that**
the compensation factor is a number vector.

8. Method according to claim 7,
**characterised in that**
the compensation factor is a number vector comprising the diagonal elements of a matrix, which is obtained by multiplying the inverted channel property matrix with the reference channel property matrix.

9. Method according to claim 8,
**characterised in that,**
based on the compensation factor determined, compensation information is only transmitted from the receiver to the transmitter when at least one vectorial element of the compensation factor adopts a value, which substantially adopts a value unequal to one.

10. Method according to claim 9,
**characterised in that**
at least one vectorial element of the compensation factor adopts a value unequal to one when the value of the vectorial element exceeds and/or falls below limits of a presettable confidence interval by a value of one.

11. Method according to claim 6,
**characterised in that**
at least one secondary diagonal element of a matrix, which is obtained by multiplying the inverted channel property matrix with the reference channel property matrix, is checked to determine whether the at least one secondary diagonal element deviates substantially from a value of zero.

12. Method according to claim 11,
**characterised in that**
in the case of a substantial deviation of at least one secondary diagonal element of the matrix, an error message is transmitted.

13. Method according to any one of the preceding claims,
**characterised in that**
the calibration message comprises orthogonal calibration symbols.

14. Method according to any one of the preceding claims,
**characterised in that**
the calibration message comprises Walsh-encoded calibration symbols.

15. Method according to any one of claims 13 to 14,
**characterised in that,**
to determine the channel property matrix with respect to the DC behaviour, a plurality of time slots of calibration message each contains an identical calibration symbol.

16. An optical transmission system for optically transferring data between a transmitter (TX) and a receiver (RX) set up to encode and transfer the data using a colour coding method based on a plurality of elementary colours with a respective optical radiation source ($T_i$, $T_j$, $T_k$) on the transmitter side for transmitting a respective elementary colour and a respective optical radiation receiver ($R_i$, $R_j$, $R_k$) on the receiver side, with
a control loop embodied between the transmitter and the receiver for transmitting calibration messages from the transmitter to the receiver,
**characterised by**
a compensation unit (CU) provided in the receiver for determining at least one compensation factor by means of comparing at least one channel property of a least one received calibration message with a corresponding channel property of at least one previously received calibration message,

a back channel (BC) for transferring compensation information based on the determined compensation factor from the receiver to the transmitter,
a correction element provided in the transmitter for the adjustment of at least one transmitting parameter on the basis of the compensation information.

**17.** Optical transmission system according to claim 16, for carrying out a method according to one of the aforementioned claims 2 to 15.

**Revendications**

**1.** Procédé de transmission optique de données entre un émetteur (TX) et un récepteur (RX),
dans lequel un procédé de codage de couleurs basé sur une pluralité de couleurs élémentaires est prévu pour le codage et la transmission des données,
dans lequel une couleur élémentaire respective est émise par au moins une source de rayonnement optique respective ($T_i$, $T_j$, $T_k$) située côté émetteur et est reçue, côté récepteur, par au moins un récepteur de rayonnement optique respectif ($R_i$, $R_j$, $R_k$),
une boucle de régulation étant formée entre l'émetteur et le récepteur,
**caractérisé en ce que**
l'émetteur envoie des messages d'étalonnage au récepteur et
au moins une information de compensation étant déterminée par comparaison d'au moins une propriété de canal d'au moins un message d'étalonnage reçu avec une propriété de canal correspondante d'au moins un message d'étalonnage envoyé auparavant ou enregistré,
une adaptation d'au moins un paramètre d'émission étant réalisée dans l'émetteur sur la base de l'information de compensation.

**2.** Procédé selon la revendication 1, **caractérisé en ce que** la comparaison d'au moins une propriété de canal est réalisée dans le récepteur,
qu'au moins un facteur de compensation est déterminé dans le récepteur par comparaison d'au moins une propriété de canal d'au moins un message d'étalonnage reçu avec une propriété de canal correspondante d'au moins un message d'étalonnage envoyé auparavant,
et que le récepteur envoie une information de compensation à l'émetteur sur la base du facteur de compensation déterminé.

**3.** Procédé selon l'une des revendications précédentes, **caractérisé en ce qu'**un facteur de compensation est déterminé pour une couleur élémentaire respective.

**4.** Procédé selon l'une des revendications précédentes, **caractérisé en ce qu'**un convertisseur (TR) situé côté émetteur est utilisé pour la conversion de données d'intensité numériques bidimensionnelles en un vecteur de données d'intensité ayant une dimension correspondant à la pluralité de couleurs élémentaires.

**5.** Procédé selon l'une des revendications précédentes, **caractérisé en ce que** l'on utilise trois couleurs élémentaires.

**6.** Procédé selon l'une des revendications précédentes, **caractérisé en ce qu'**au moins un facteur de compensation est déterminé par comparaison d'une matrice de propriétés de canal d'au moins un message d'étalonnage reçu avec une matrice de propriétés de canal de référence correspondante d'au moins un message d'étalonnage envoyé auparavant ou enregistré.

**7.** Procédé selon la revendication 6, **caractérisé en ce que** le facteur de compensation est un vecteur numérique.

**8.** Procédé selon la revendication 7, **caractérisé en ce que** le facteur de compensation est un vecteur numérique composé des éléments diagonaux d'une matrice obtenue en multipliant la matrice de propriétés de canal inversée par la matrice de propriétés de canal de référence.

**9.** Procédé selon la revendication 8, **caractérisé en ce que** le récepteur n'envoie une information de compensation à l'émetteur, sur la base du facteur de compensation déterminé, que lorsqu'au moins un élément vectoriel du facteur de compensation prend une valeur qui prend essentiellement une valeur différente de un.

**10.** Procédé selon la revendication 9, **caractérisé en ce qu'**au moins un élément vectoriel du facteur de compensation prend une valeur différente de un lorsque l'élément vectoriel prend une valeur dépassant de un la limite supérieure et/ou la limite inférieure d'un intervalle de confiance pouvant être prédéfini.

**11.** Procédé selon la revendication 6, **caractérisé en ce qu'**au moins un élément diagonal secondaire d'une matrice obtenue en multipliant la matrice de propriétés de canal inversée par la matrice de propriétés de canal de référence est contrôlé pour vérifier si l'au moins un élément diagonal secondaire a une valeur essentiellement différente de zéro.

**12.** Procédé selon la revendication 11, **caractérisé en ce que**, en cas de différence essentielle pour au moins un élément diagonal secondaire de la matrice, un message d'erreur est envoyé.

**13.** Procédé selon l'une des revendications précédentes, **caractérisé en ce que** le message d'étalonnage comprend des symboles d'étalonnage orthogonaux.

**14.** Procédé selon l'une des revendications précédentes, **caractérisé en ce que** le message d'étalonnage comprend des symboles d'étalonnage codés en code de Walsh.

**15.** Procédé selon l'une des revendications 13 à 14, **caractérisé en ce que**, pour la détermination de la matrice de propriétés de canal concernant le comportement en courant continu, une pluralité d'intervalles de temps du message d'étalonnage contient à chaque fois un symbole d'étalonnage identique.

**16.** Système de transmission optique pour la transmission optique de données entre un émetteur (TX) et un récepteur (RX), adapté pour coder et transmettre les données en utilisant un procédé de codage de couleurs basé sur une pluralité de couleurs élémentaires, comprenant une source de rayonnement optique respective ($T_i$, $T_j$, $T_k$) située côté émetteur pour l'émission d'une couleur élémentaire respective et un récepteur de rayonnement optique respectif ($R_i$, $R_j$, $R_k$) situé côté récepteur,
comprenant une boucle de régulation formée entre l'émetteur et le récepteur pour l'émission de messages d'étalonnage de l'émetteur au récepteur,
**caractérisé par**
une unité de compensation (CU) prévue dans le récepteur pour la détermination d'au moins un facteur de compensation par comparaison d'au moins une propriété de canal d'au moins un message d'étalonnage reçu avec une propriété de canal correspondante d'au moins un message d'étalonnage reçu auparavant,
un canal de retour (BC) pour la transmission d'une information de compensation du récepteur à l'émetteur sur la base du facteur de compensation déterminé,
un élément de correction prévu dans l'émetteur pour l'adaptation d'au moins un paramètre d'émission sur la base de l'information de compensation.

**17.** Système de transmission optique selon la revendication 16, pour l'exécution d'un procédé selon l'une des revendications précédentes 2 à 15.

FIG 1

TX          TRM          RX

DAT → CC → TR → DA → Ti / Ri → DA → TR → CC → DAT

DA → Tj / Rj → DA

DA → Tk / Rk → DA

EP 2 502 363 B1

## FIG 2

## FIG 3

## FIG 4A

## FIG 4B

FIG 5

EP 2 502 363 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004068745 A1

**In der Beschreibung aufgeführte Nicht-Patentliteratur**

- **YOKOI et al.** Modified Text clause 6.9.2.2. *Standard IEEE P802.15,* 17. Januar 2010